(19) Europäisches Patentamt

European Patent Office

Office européen des brevets

(11) **EP 0 547 295 B1**

(12) **EUROPÄISCHE PATENTSCHRIFT**

(45) Veröffentlichungstag und Bekanntmachung des Hinweises auf die Patenterteilung:
**09.10.1996 Patentblatt 1996/41**

(51) Int. Cl.$^6$: **B01D 53/34**

(21) Anmeldenummer: **92113851.7**

(22) Anmeldetag: **14.08.1992**

(54) **Verfahren zur Behinderung der organischen Schadstoffbildung und Dampferzeuger zur Durchführung des Verfahrens**

Process for preventing the formation of organic contaminants and vapour generator for this purpose

Procédé pour éviter la formation de polluants organiques et générateur de vapeur pour ce procédé

(84) Benannte Vertragsstaaten:
**AT CH DE DK FR LI NL SE**

(30) Priorität: **18.12.1991 AT 2504/91**

(43) Veröffentlichungstag der Anmeldung:
**23.06.1993 Patentblatt 1993/25**

(73) Patentinhaber: **AUSTRIAN ENERGY & ENVIRONMENT SGP/WAAGNER-BIRO GmbH A-1210 Wien (AT)**

(72) Erfinder:
• **Bobik, Michael, Dr. A-8042 Graz (AT)**
• **Lindbauer, Ralf, Dr. A-8045 Graz (AT)**
• **Glasner, Alfred, Dipl.-Ing. A-8162 Passail (AT)**

(74) Vertreter: **Wallner, Gerhard, Dipl.-Ing. c/o Waagner-Biro Aktiengesellschaft Patentabteilung Stadlauer-Strasse 54 Postfach 11 1221 Wien (AT)**

(56) Entgegenhaltungen:
EP-A- 0 381 946          WO-A-90/00703
DE-A- 3 601 917          DE-A- 3 623 015
DE-A- 4 012 982          US-A- 4 681 045

**Beschreibung**

Die Erfindung betrifft ein Verfahren zur Behinderung der organischen Schadstoffbildung aus organischen Bausteinen, insbesondere Dioxin- und Furanbildung, in schwefelhaltigen Rauchgasen nach der Verbrennung von zusammengesetzten Brennstoffen, wie Müll, bestehend aus Haus- und/oder Gewerbe- bzw. Sonderabfällen, in einer Brennkammer mit rauchgaseitig nachgeschalteter Rauchgaskühlung und Reinigung und einen Dampferzeuger zur Durchführung des Verfahrens.

Es ist bekannt, daß bei der Verbrennung von Schwefel $SO_2$ und in einem bestimmten Verhältnis hiezu $SO_3$ entsteht. Bei der Müllverbrennung werden maximal 7 mg $SO_3/m^3$ emittiert.

Es ist weiters aus der AT-B 392.912 bzw. 392.913 sowie WO 90/00703 bekannt, zur Verminderung der Dioxinbildung im Abgas dem Verbrennungsabgas $SO_2$ direkt oder durch zusätzliche Verbrennung von schwefelhältigen Brennstoffen (Abfälle) indirekt zuzuführen. Dieses letztere Verfahren brachte aber auch bei großen Schwefelzugaben nur einen Teilerfolg, indem der Dioxingehalt am Filterstaub praktisch nicht verändert wurde. Im Filterstaub sind Metalle wie Kupfer, Strontium, Blei, Eisen etc. mit katalytischen Fähigkeiten enthalten, wobei das Kupfer in Verbindung mit Chlor eine besondere Rolle spielt. Wir verweisen auf die nachstehenden Gleichungen 1 bis 4:

1)

$$2CuO + 4HCl = 2CuCl_2 + 2H_2O$$

2)

$$2CuCl_2 = 2CuCl + Cl_2$$

3)

$$2CuCl + \tfrac{1}{2} O_2 = Cu_2OCl_2$$

4)

$$Cu_2OCl_2 + 2HCl = 2CuCl_2 + H_2O$$

Aus diesen Gleichungen ergibt sich, daß das Kupfer durch zahlreiche Umwandlungen das Verbrennungsprodukt HCl in Chlor umwandelt und so einen katalytischen Effekt zur (Neu-)Bildung von PCDD/F ausübt. Das entstehende Chlor (Gleichung 2) verbindet sich mit Kohlenstoffverbindungen, Aromaten und auch Ruß (Unverbranntes) und bildet die chlorierten Kohlenstoffverbindungen, zu denen Dioxine und Furane zählen. Im Filterstaub von Müllverbrennungsanlagen ist etwa 0,1 % Kupfer und oft mehr als 10 % Kohlenstoff enthalten, wobei zu berücksichtigen ist, daß ein Großteil der in der Verbrennung freiwerdenden Metalle bereits mit der Schlacke bzw. Brennkammerasche dioxinfrei in der Brennkammer ausgeschieden werden.

Aus der DE-A 40 12 982 ist es bekannt, Schadstoffe aus dem Abgas durch Bindung an oberflächenaktive Substanzen abzuscheiden, wobei $SO_2$ zur besseren Absorption in $SO_3$ sowie NO in $NO_2$ umgewandelt wird und die organischen Schadstoffe, wie Dioxine und Furane, sowie Schwennetallstäube an den oberflächenaktiven Substanzen angelagert werden. Es werden also die Dioxine nach ihrer Bildung zusammen mit den beladenen Substanzen und Absorbentien abgeschieden.

Die Erfindung hat es sich zur Aufgabe gestellt, die Chlorfreisetzung im Staub zur Dioxinbildung zu unterbinden und die vorliegenden katalytischen Metalle durch Sulfatisierung zu inertisieren, sodaß Metall/Chlorverbindungen vermieden werden ($CuO + SO_3 = CuSO_4$) und damit die Dioxinbildung behindert wird.

Die Erfindung ist dadurch gekennzeichnet, daß der $SO_3$-Gehalt des Rauchgases auf 7 bis 500 mg/m³ vor der Entstaubung durch Zugabe von Schwefelsäure, $SO_3$ oder Sulfate, insbesondere Natriumsulfate, oder auch nur Oxidantien oder Katalysatoren zur Umwandlung von $SO_2$ in $SO_3$ der Feuerung bzw. dem Rauchgas bei Temperaturen von mehr als 150° C erhöht wird und die im Rauchgas enthaltenen Metallstäube, insbesondere Schwermetallstäube, wie vorzugsweise Kupferstäube, zumindest im Oberflächenbereich vermehrt zu Sulfaten umgesetzt werden. Weitere wesentliche Verfahrensmerkmale zur Ausgestaltung der Erfindung sind in den Unteransprüchen 2 bis 12 angegeben.

Der erfindungsgemäße Dampferzeuger ist zumindest teilweise aus mit Wolfram und/oder Vanadin legierten oder beschichteten Stählen gebildet, wobei insbesondere die Nachschaltheizflächen vor der Entstaubungseinrichtung demgemäß ausgebildet sind.

Die Erfindung löst auch ein anderes Problem der schleichenden Mehrerzeugung von Schadstoffen wie Dioxin und Furan mit steigendem Verschmutzungsgrad der rauchgasumströmten Heizflächen. Da die Sulfatisierung gegenüber der Chlorierung chemisch bevorzugt erfolgt, werden die Metalle im Flugstaub sehr rasch sulfatisiert, so daß die wirksame Chlorbildung auch aus den Ablagerungen, aus HCl über die Metalle zum Erliegen kommt, und dadurch auch die Dioxin- bzw. Furanbildung verringert wird. Mit anderen Worten, die Verschmutzung der Heizflächen geht nicht mehr parallel zur Dioxinbildung. Die Erfindung besteht in der $SO_3$-Erhöhung im Rauchgas auf Werte zwischen 7 und 500 mg/m³ Rauchgas, wobei in einfacher Weise $SO_3$ aus entsprechenden $SO_3$-Erzeugungsanlagen in das Abgas vorzugsweise in der Brennkammer oder an mehreren Stellen zwischen der Brennkammer und der Entstaubungseinrichtung bei einer Rauchgastemperatur von über 150° C eingebracht bzw. eingeblasen wird. Gegebenenfalls kann auch Schwefelsäure, wie z.B. verdünnte oder Abfallschwefelsäure mit dem Brennstoff verbrannt werden. Beispielsweise kann die Zugabe über eine oder mehrere Stellen der Verbrennungsluft eingebracht bzw. eingeblasen werden. Da die Schwefeloxide Schadstoffe sind, die in der Praxis mit Kalk abgebunden werden, ist es bei genügendem $SO_2$-Gehalt sinnvoll, anstelle zusätzlicher Schwefeloxidzugaben durch Zugabe von Oxidantien wie Sauerstoff, Ozon, Chrom-VI-Verbindungen, Perverbindungen, wie z.B. Peroxide, Permanganate und Peroxodisulfate, und Radikale bzw. radikalfördernde Substanzen oder Katalysatoren in der Brennkammer oder durch Ausbildung der Brennkammer oder nachgeschalteter Teile als Katalysator einen größeren Teil des oxidierten Schwefels als $SO_3$ vorliegt, obwohl die Gesamtschwefelmenge im Abgas ($SO_2 + SO_3$) konstant bleibt und keine zusätzlichen Bindemittel wie Kalk benötigt werden. Bringt man einen Teil des Kalkes in Form von $Ca(OH)_2$ bereits in der Brennkammer ein, wofür sich eine Wirbelbettverbrennung besonders gut eignet, so entstehen Oxidantien bzw. Radikale, die das $SO_2$ in $SO_3$ umwandeln und damit den gewünschten Erfolg bringen. Hiebei ist aber zu beachten, daß hier relativ zum Chlor viele Schwefeloxide vorhanden sein müssen, da das Kalzium Schwefelverbindungen bindet und ein gewisses Cl/S-Verhältnis nicht unterschritten werden soll. Einen ähnlichen Effekt erreicht man durch Verbrennung von Vanadin- bzw. Wolframhältigen Altölen, deren Schwermetallgehalt (Wolfram bzw. Vanadin) in der Weise katalytisch wirkt, daß eine verstärkte $SO_3$-Umwandlung erfolgt. Es wird dadurch ein Entsorgungsproblem für Altöle gelöst. Es kann aber auch das Problem der verbrauchten Katalysatoren bereinigt werden, indem die verbrauchten SCR-Katalysatoren der Denox-Anlagen aus Kraftswerkskesseln fein gemahlen in die Feuerung eingebracht werden, wobei der Schwermetallanteil, hauptsächlich Wolfram und Vanadin, wie bei Altölzusatz eine katalytische $SO_3$-Bildung begünstigt. Eine Grundbedingung ist aber, daß das Schwefel/Chlor-Verhältnis in den Abgasen, wie beispielsweise in den AT-PSn 392.912 und 392.913 dargelegt ist, erhöht wird. In diesen Patentschriften wird hauptsächlich die Dioxinbildung in der Gasphase beeinflußt und die Wirkung des Staubes infolge des geringen $SO_3$-Gehaltes kaum beeinflußt, da dieser in normalen Abgasen von Müllverbrennungen im allgemeinen unter 7 mg/m$_3$ Rauchgas liegt und diese Schwefelfracht zur ausreichenden Sulfatisierung der Metallteile im Staub zu wenig ist. Konstruktiv läßt sich das Verfahren in einem Dampferzeuger lösen, dessen Rohre, bzw. Heizflächen beginnend in der Brennkammer bis zur Staubabscheidung von einem Wolfram- und/oder Vanadin-beschichteten oder -hältigen Stahl gebildet werden und dadurch der Dampferzeuger selbst als Katalysator ausgebildet ist. Besonders geeignet sind hiezu die Nachschaltheizflächen außerhalb der Brennkammer und vor der Entstaubung im Temperaturbereich 300 bis 800°C.

## Patentansprüche

1. Verfahren zur Behinderung der organischen Schadstoffbildung aus organischen Bausteinen, insbesondere Dioxin- und Furanbildung, in schwefelhaltigen Rauchgasen nach der Verbrennung von zusammengesetzten Brennstoffen, wie Müll, bestehend aus Haus und/oder Gewerbe- bzw. Sonderabfallen, in einer Brennkammer mit rauchgaseitig nachgeschalteter Rauchgaskühlung und Reinigung, dadurch gekennzeichnet, daß der $SO_3$-Gehalt des Rauchgases auf 7 bis 500 mg/m$^3$ vor der Entstaubung durch Zugabe von Schwefelsäure, $SO_3$ oder Sulfate, insbesondere Natriumsulfate, oder auch nur Oxidantien oder Katalysatoren zur Umwandlung von $SO_2$ in $SO_3$ der Feuerung bzw. dem Rauchgas bei Temperaturen von mehr als 150° C erhöht wird und die im Rauchgas enthaltenen Metallstäube, insbesondere Schwermetallstäube, wie vorzugsweise Kupferstäube, zumindest im Oberflächenbereich vermehrt zu Sulfaten umgesetzt werden.

2. Verfahren nach Anspruch 1, dadurch gekennzeichnet, daß zusätzlich zu den Schwefelverbrennungen im Brennstoff durch katalytische Wirkung, Sulfatverbrennung bzw. $SO_3$-Zugabe, das $SO_2/SO_3$-Verhältnis im Abgas in Richtung zu mehr $SO_3$ verschoben wird und im Abgas das in Staubform vorliegende Schwermetall in Sulfatform abgebunden wird.

3. Verfahren nach Anspruch 1 oder 2, dadurch gekennzeichnet, daß die Zuführung an mehreren Stellen im Rauchgaskanal zwischen der Brennkammer und der Entstaubung erfolgt.

4. Verfahren nach Anspruch 1, dadurch gekennzeichnet, daß die Erzeugung von $SO_3$ in an sich bekannten Anlagen im Bereich der Zuführung erfolgt.

5. Verfahren nach Anspruch 1, dadurch gekennzeichnet, daß Schwefel oder schwefelhältige Verbindungen zugesetzt werden, wobei die Reaktionsprodukte in kinetisch begünstigter Weise über $SO_3$ zu höherer Sulfatbildung auf der Stauboberfläche des Rohgasstaubes führen.

6. Verfahren nach Anspruch 1, dadurch gekennzeichnet, daß zur erhöhten $SO_3$-Bildung Stoffe, welche die vermehrte Umsetzung des im Brennstoff vorhandenen Schwefels zu $SO_3$, insbesondere im Wirbelbett, begünstigen, eingebracht werden.

7. Verfahren nach Anspruch 1, dadurch gekennzeichnet, daß katalytische Substanzen, welche die Bildung von $SO_3$ aus $SO_2$ kinetisch fördern, in den Brennstoff eingebracht werden.

8. Verfahren nach Anspruch 1 oder 7, dadurch gekennzeichnet, daß eine Zugabe von Wolfram, Vanadin oder deren Verbindungen zusätzlich zum Brennstoff in fester, flüssiger oder pastöser Form, vorzugsweise in Form von Vanadin-hältigen Altölen, erfolgt.

9. Verfahren nach Anspruch 8, dadurch gekennzeichnet, daß alterungsbedingt ausgeschiedene Katalysatoren, beispielsweise aus der Denox-Rauchgasreinigungskeramik, dem Brennstoff fein gemahlen zugegeben werden, oder an einem oder mehreren Punkten in das ungereinigte Rauchgas eingebracht werden.

10. Verfahren nach Anspruch 2, dadurch gekennzeichnet, daß als die Oxidation von $SO_2$ zu $SO_3$ förderliche Chemikalien Oxidantien wie $O_2$ (Reinsauerstoffzugabe), Peroxide, Permanganat, Ozon, Radikale bzw. Radikal-fördernde Substanzen, wie thermisch zerfallende Pulver oder Kristalle wie $Ca(OH)_2$, $NaHCO_3$, Alkalihydroxide, in das Rauchgas eingebracht werden.

11. Verfahren nach Anspruch 1, dadurch gekennzeichnet, daß die Bildung eines Katalysators die Stahlteile, insbesondere Rohre, die mit den Rauchgasen in Berührung kommen, beginnend mit der Brennkammer bis zur ersten Entstaubungseinrichtung aus mit Wolfram bzw. Vanadin legierten oder beschichteten Stählen gebildet werden.

12. Verfahren nach Anspruch 1, dadurch gekennzeichnet, daß schwefelhältige Materialien, insbesondere Schwefelsäure, Abfallschwefelsäure, thermisch zersetzbare Sulfate, dem Brennstoff und/oder der Verbrennungsluft an einer oder mehreren Stellen der Feuerung zugeführt werden.

13. Dampferzeuger, insbesondere Verbrennungskessel für Müll und/oder Sonderabfällen zur Durchführung des Verfahrens nach mindestens einem der Ansprüche 1 bis 12, dadurch gekennzeichnet, daß zumindest ein Teil des Dampferzeugers im Rauchgastemperaturgebiet von höher als 150° C von einem mit Wolfram und/oder Vanadin legierten oder beschichteten Stahl gebildet ist.

14. Dampferzeuger nach Anspruch 13, dadurch gekennzeichnet, daß die Nachschaltheizflächen zwischen Brennkammer und Entstaubungseinrichtung von mit Wolfram und/oder Vanadin legiertem oder beschichtetem Stahl gebildet sind.

## Claims

1. Process for inhibiting the formation of organic contaminants of organic components, in particular the forming of dioxin and furan, in sulfur containing flue gases after combustion of composite fuels, such a refuse composed of domestic and/or industrial or special waste, in a combustion chamber with flue-gas cooling downstream of the flue gas and purification, **characterized in that** the $SO_3$ content of the flue gas is increased to between 7 and 500 mg/m$^3$ prior to dust removal by an addition of sulfuric acid, $SO_3$ or sulfates, in particular sodium sulfates, or only oxidants or catalysts for the conversion of $SO_2$ into $SO_3$ of the furnace or the flue gas at temperatures of above 150°C, and metal dusts contained in the flue gas, in particular heavy-metal dusts, such as preferably copper dusts, are at least in the surface area increasingly converted to sulfates.

2. Process according to Claim 1, **characterized in that**, in addition to sulfur combustion in fuel by catalytic effect, sulfate combustion or $S_3$-addition, the $SO_2 / S_3$ ratio in flue gas is moved towards more $SO_3$, and heavy metal present in the form of dust in the flue gas is detached in the form of sulfate.

3. Process according to Claim 1 or 2, **characterized in that** feeding is carried out in several places in the flue-gas channel between the combustion chamber and dust removal.

4. Process according to Claim 1, **characterized in that** $SO_3$ is generated in conventional plants in the feed area.

5. Process according to Claim 1, **characterized in that** sulfur or sulfur containing composites are added, and the reaction products lead in a kinetically promoted manner via $SO_3$ to increased formation of sulfate on the dust surface of flue-gas dust.

6. Process according to Claim 1, **characterized in that**, for the purpose of increased $SO_3$ generation, substances are fed which promote increased conversion of sulfur contained in the fuel to $SO_3$, in particular in the fluidized bed.

7. Process according to Claim 1, **characterized in that** catalytic substances which kinetically promote for forming of $SO_3$ from $SO_2$ are fed to the fuel.

8. Process according to Claim 1 or 7, **characterized in that** tungsten, vanadium or their composites is added in addition to solid, liquid or paste fuel, preferably in the form of vanadium containing old oils.

9. Process according to Claim 8, **characterized in that** catalysts removed due to ageing, for example from a Denox flue-gas cleaning ceramics, are added finely ground to the fuel or are at one or several points fed to impure flue gas.

10. Process according to Claim 2, **characterized in that** chemicals promoting oxidation from $SO_2$ to $SO_3$ in the form of oxidants such as $O_2$ (addition of pure oxygen), peroxides, permanganate, ozone, radicals or radical promoting substances, such as thermally decomposing powders or crystals such as $Ca(OH)_2$, $NaHCO_3$, alkali hydroxides, are fed to the flue gas.

11. Process according to Claim 1, **characterized in that** for the purpose of obtaining a catalyst the steel parts, in particular pipes which make contact with flue gases, starting with the combustion chamber up to the first dust-removing device, are made of steel alloyed or coated with tungsten or vanadium.

12. Process according to Claim 1, **characterized in that** sulfur containing materials, in particular sulfuric acid, waste sulfuric acid, thermally decomposable sulfates, are at one or several points of the furnace added to the fuel and/or the combustion air.

13. Vapour generator, in particular combustion vessel for refuse and/or special waste, for carrying out the process according to at least one of Claims 1 to 12, **characterized in that** for the purpose of obtaining a catalyst at least a portion of the vapour generator is formed in a flue-gas-temperature area above 150°C by a tungsten and/or vanadium alloyed or coated steel.

14. Vapour generator according to Claim 13, **characterized in that** downstream heating surfaces between combustion chamber and dust-removing device are formed by tungsten and/or vanadium alloyed or coated steel.

## Revendications

1. Procédé pour éviter la formation de polluants organiques à base d'éléments organiques, en particulier la formation de dioxine et de furane, dans des gaz de fumée contenant du soufre après la combustion de combustibles composés tel que des ordures composées de déchets ménagers et/ou industriels ou de déchets spéciaux, dans une chambre de combustion avec un refroidissement et une épuration des gaz de fumée placés en aval de la sortie des gaz de fumée, caractérisé en ce que la teneur en $SO_3$ du gaz de fumée est augmentée à 7 jusqu'à 500 mg/m$^3$ avant le dépoussiérage par addition d'acide sulfurique, de $SO_3$ ou de sulfates, notamment de sulfates de sodium, ou bien seulement des agents oxydants ou des catalyseurs destinés à convertir le $SO_2$ en $SO_3$ sont ajoutés au combustible ou au gaz de fumée à des températures supérieures à 150° C, et les poussières métalliques contenues dans le gaz de fumée, notamment les poussières de métaux lourds, telles que, de préférence, les poussières de cuivre, sont converties de manière accrue en sulfates au moins dans la zone superficielle.

2. Procédé selon la revendication 1, caractérisé en ce que, en plus des combustions du soufre dans le combustible par effet catalytique, combustion de sulfate ou addition de $SO_3$, le rapport $SO_2/SO_3$ dans le gaz d'échappement est décalé dans le sens d'une augmentation du $SO_3$ et le métal lourd présent sous forme de poussière est pris sous la forme de sulfate dans le gaz d'échappement.

3. Procédé selon la revendication 1 ou 2, caractérisé en ce que l'alimentation se fait en plusieurs endroits dans le conduit de gaz de fumée entre la chambre de combustion et le dépoussiérage.

4. Procédé selon la revendication 1, caractérisé en ce que la production de $SO_3$ se fait dans des installations en soi connues dans la zone de l'alimentation.

5. Procédé selon la revendication 1, caractérisé en ce que du soufre ou des liaisons soufrées sont ajouté(e)s, de sorte que les produits de réaction donnent de manière favorisée du point de vue cinétique par l'intermédiaire du $SO_3$ une plus grande formation de sulfate sur la surface des poussières de la poussière du gaz brut.

6. Procédé selon la revendication 1, caractérisé en ce que des substances favorisant la conversion accrue du soufre présent dans le combustible en $SO_3$, notamment dans le lit fluidisé, sont introduites pour augmenter la formation de $SO_3$.

7. Procédé selon la revendication 1, caractérisé en ce que des substances catalytiques activant de manière cinétique la formation de $SO_3$ à partir du $SO_2$ sont introduites dans le combustible.

8. Procédé selon la revendication 1 ou 7, caractérisé ,en ce que du tungstène, du vanadium ou un composé de ceux-ci est également ajouté au combustible sous forme solide, liquide ou pâteuse, de préférence sous la forme d'huiles usées contenant du vanadium.

9. Procédé selon la revendication 8, caractérisé en ce que les catalyseurs rejetés en fonction du vieillissement, par exemple à partir de la céramique de dépoussiérage de gaz de fumée Denox, sont ajoutés finement broyés au combustible ou bien introduits en un ou plusieurs points dans le gaz de fumée non épuré.

10. Procédé selon la revendication 2, caractérisé en ce que sont introduits dans le gaz de fumée comme produits chimiques activant l'oxydation du $SO_2$ en $SO_3$ des agents oxydants tels que l'$O_2$ (addition d'oxygène pur), du peroxyde, du permanganate, de l'ozone, des radicaux ou des substances activant les radicaux telles que des poudres ou des cristaux qui sont désagrégés par la chaleur comme le $Ca(OH)_2$, le $NaHCO_3$, les hydroxydes alcalins.

11. Procédé selon la revendication 1, caractérisé en ce que, pour la formation d'un catalyseur, les pièces en acier, notamment les canalisations, venant en contact avec les gaz de fumée, depuis la chambre de combustion jusqu'au premier dispositif de dépoussiérage, sont formées d'aciers alliés ou revêtus de tungstène ou de vanadium.

12. Procédé selon la revendication 1, caractérisé en ce que des matériaux contenant du soufre, notamment de l'acide sulfurique, de l'acide sulfurique usé, des sulfates décomposables par la chaleur, sont ajoutés au combustible et/ou à l'air de combustion à un ou plusieurs endroits du foyer.

13. Générateur de vapeur, en particulier chaudière de combustion d'ordures et/ou de déchets spéciaux pour réaliser le procédé selon l'une au moins des revendications 1 à 12, caractérisé en ce qu'une partie au moins du générateur de vapeur dans la zone de température des gaz de fumée supérieure à 150° C est formée dans un acier allié du revêtu de tungstène et/ou de vanadium.

14. Générateur de vapeur selon la revendication 13, caractérisé en ce que les surfaces chauffantes en aval entre la chambre de combustion et le dispositif de dépoussiérage sont formées dans un acier allié ou revêtu de tungstène et/ou de vanadium.